# EUROPÄISCHE PATENTANMELDUNG

(11) **EP 1 334 878 A2**
(43) Veröffentlichungstag der Anmeldung: **13.08.2003**
(21) Anmeldenummer: 03000655.5
(22) Anmeldetag: 16.01.2003
(51) Int. Cl.: B60R 13/02

(54) **Dachmodul für ein Fahrzeug sowei Verfahren zu seiner Herstellung**

(30) Priorität: 08.02.2002 DE 10205295
(71) Anmelder: ArvinMeritor GmbH, 63128 Dietzenbach (DE)
(72) Erfinder: Schönebeck, Horst, 63571 Gelnhausen (DE)
(74) Vertreter: Sties, Jochen, Dipl.-Ing.

(57) **Zusammenfassung**

Bei einem Dachmodul (10) für ein Fahrzeug, mit einer Außenschicht (14), die aus Polyurethan besteht, und einer Innenschicht (16), die ebenfalls aus Polyurethan besteht, ist die Innenschicht dicker als die Außenschicht und mit einem Verstärkungsmaterial versehen. Zur Herstellung des Dachmoduls wird ein Einlegeteil (16) hergestellt, das aus Polyurethan besteht, in das ein Verstärkungsmaterial eingebettet ist; das Einlegeteil wird in eine Schäumform (24) eingelegt, und auf das Einlegeteil wird eine Außenschicht (14) aufgeschäumt, die aus Polyurethan besteht

## Beschreibung

Die Erfindung betrifft ein Dachmodul für ein Fahrzeug sowie ein Verfahren zur Herstellung eines solchen Dachmoduls.

Im Stand der Technik bekannt sind Dachmodule, die eine Außenschicht und eine Innenschicht aufweisen, wobei sowohl die Außenschicht als auch die Innenschicht aus Kunststoff bestehen. Als Außenschicht wird dabei diejenige Lage des Verbundaufbaus verstanden, die bei am Fahrzeug montiertem Dachmodul von außen sichtbar ist. Bei einem bekannten Dachmodul besteht die Außenschicht aus einem thermoplastischen Kunststoff, der ausgehend von einer Platte in die gewünschte Form tiefgezogen wird. Die Außenschicht wird dann im tiefgezogenen Zustand in eine Schäumform eingelegt, in der auf die Innenseite der Außenschicht die Innenschicht aufgeschäumt wird. In das Material der Innenschicht sind Glasfasern eingebettet, die für die notwendige mechanische Festigkeit sorgen.

Bei einem solchen Dachmodul ist ein hoher Aufwand erforderlich, um zu gewährleisten, daß die Innenschicht und die Außenschicht bei allen Betriebsbedingungen, denen das Fahrzeug mit einem solchen Dachmodul später ausgesetzt ist, zuverlässig aneinander haften. Dieser hohe Aufwand ist besonders deshalb erforderlich, da die Innenschicht und die Außenschicht unterschiedliche Wärmeausdehnungskoeffizienten haben. Ein weiteres Problem besteht darin, daß ein extrem hoher Aufwand erforderlich ist, beim Tiefziehen der Außenschicht eine hohe Oberflächenqualität zu gewährleisten. Da die Außenschicht zu den sichtbaren Außenteilen des Fahrzeugs gehört, sollte sie eine ähnlich hohe optische Qualität aufweisen wie beispielsweise ein lackiertes Karosserie-Blechteil.

Die Aufgabe der Erfindung besteht darin, ein Dachmodul zu schaffen, das mit geringem Aufwand hergestellt werden kann und gleichzeitig eine besonders hohe Oberflächenqualität auf der Außenseite hat. Die Aufgabe der Erfindung besteht weiterhin darin, ein Verfahren zur Herstellung eines solchen Dachmoduls bereitzustellen.

Zur Lösung dieser Aufgabe ist erfindungsgemäß ein Dachmodul für ein Fahrzeug vorgesehen, mit einer Außenschicht, die aus Polyurethan besteht, und einer Innenschicht, die ebenfalls aus Polyurethan besteht, wobei die Innenschicht dicker ist als die Außenschicht und mit einem Verstärkungsmaterial versehen ist. Da die Innenschicht und die Außenschicht aus demselben Material bestehen, nämlich Polyurethan, haben die beiden Schichten auch denselben Wärmeausdehnungskoeffizienten, so daß es bei Temperaturschwankungen, denen das Dachmodul ausgesetzt ist, nur zu sehr geringen Wärmespannungen kommt. Daher ist es ausreichend, beispielsweise die Außenschicht auf die Innenschicht aufzuschäumen, ohne durch aufwendige Zwischenschritte eine besonders gute Verbindung zwischen den beiden Schichten sicherzustellen. Eine besonders gute Oberflächenqualität der Außenschicht läßt sich erreichen, indem die entsprechende Fläche der Schäumform, in der das Dachmodul hergestellt wird, mit hoher Oberflächenqualität ausgeführt wird. Eine solche hohe Oberflächenqualität kann beispielsweise durch Polieren oder Verchromen der entsprechenden Fläche der Schäumform erzielt werden. Es wurde nämlich überraschenderweise festgestellt, daß auf diese Weise mit geringem Aufwand Oberflächenqualitäten herstellbar sind, die allen optischen Anforderungen an ein sichtbares Karosserieteil eines Fahrzeugs genügen.

Als Verstärkungsmaterial für die Innenschicht sind hochfeste Fasern geeignet, die gleichmäßig in die Innenschicht eingebettet sind, insbesondere Glasfasern.

Eine spätere Lackierung des Dachmoduls ist nicht erforderlich, wenn die Außenschicht bei der Herstellung in der gewünschten Weise eingefärbt wird. Dies führt zu einer hohen Kosteneinsparung.

Bei einem erfindungsgemäßen Verfahren zur Herstellung eines Dachmoduls wird zuerst ein Einlegeteil hergestellt, das aus Polyurethan besteht, in das ein Verstärkungsmaterial eingebettet ist. Anschließend wird das Einlegeteil in eine Schäumform eingelegt, und es wird auf das Einlegeteil eine Außenschicht aufgeschäumt, die aus Polyurethan besteht. Hinsichtlich der Vorteile, die sich mit dem Verfahren ergeben, wird auf die obigen Erläuterungen verwiesen.

Vorteilhafte Ausgestaltungen der Erfindung ergeben sich aus den Unteransprüchen.

Die Erfindung wird nachfolgend anhand einer bevorzugten Ausführungsform beschrieben, die in den beigefügten Zeichnungen dargestellt ist. In diesen zeigen:
- Figur 1 in einer schematischen perspektivischen Ansicht ein erfindungsgemä ßes Dachmodul;
- Figur 2 einen Schnitt entlang der Ebene II-II von Figur 1;
- Figur 3 in einer schematischen Ansicht die Herstellung der als Einlegeteil dienenden Innenschicht;
- Figur 4 in einer geschnittenen Ansicht die Innenschicht; und
- Figur 5 in einer schematischen Ansicht die Aufbringung der Außenschicht auf die Innenschicht.

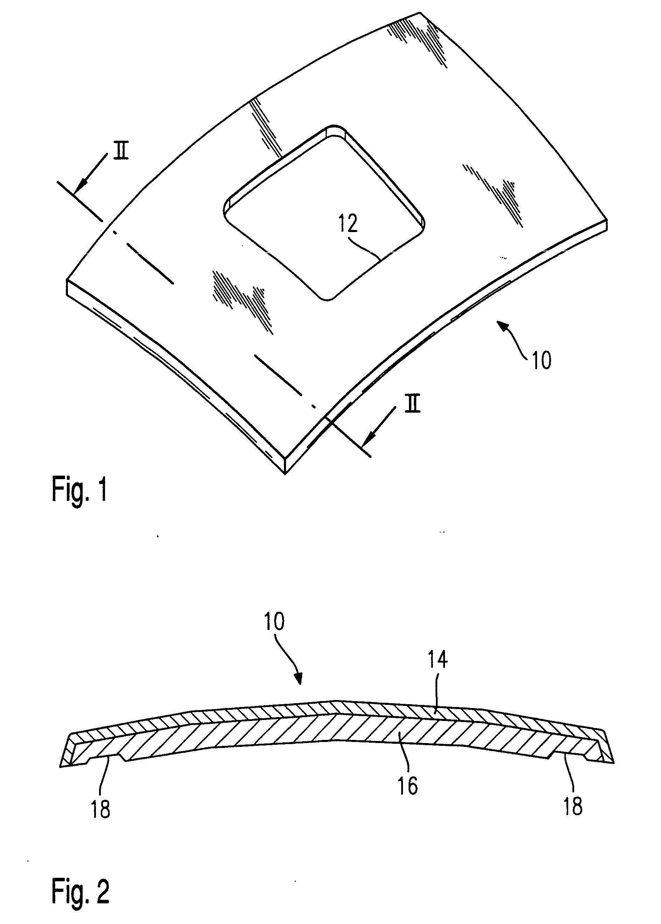

In Figur 1 ist ein Dachmodul 10 gezeigt, das dafür vorgesehen ist, auf eine Fahrzeugkarosserie aufgesetzt und mit dieser fest verbunden zu werden, beispielsweise durch Verkleben. Im Dachmodul ist eine Dachöffnung 12 vorgesehen, in der ein Deckel eines Schiebedachsystems angeordnet werden kann. Das Dachmodul 10 ist ein Verbundteil und besteht aus einer Außenschicht 14 und einer Innenschicht 16 (siehe Figur 2). Die Außenschicht 14 besteht aus eingefärbtem Polyurethan und hat eine Dicke in der Größenordnung von 1 bis 2 mm. Die Innenschicht 16 besteht ebenfalls aus Polyurethan, hat eine Dicke in der Größenordnung von 5 bis 6 mm und ist mit einem Verstärkungsmaterial versehen, das durch Glasfasern gebildet ist. Auf der von der Außenschicht 14 abgewandten Seite der Innenschicht 16 sind Verbindungsnuten 18 vorgesehen, die zum Verbinden des Dachmoduls 10 mit der Fahrzeugkarosserie dienen.

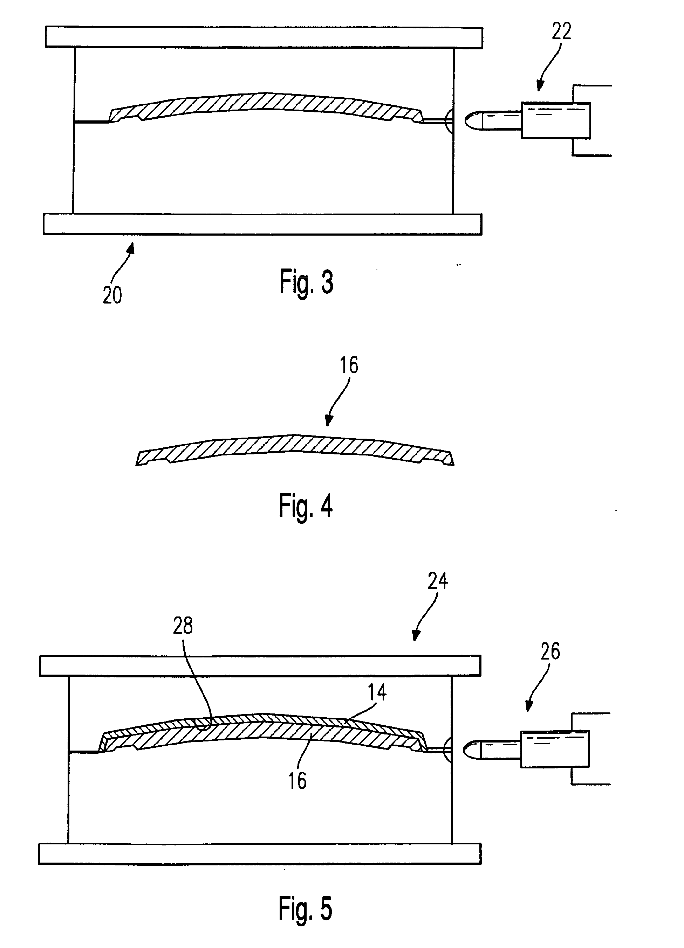

Anhand der Figuren 3 bis 5 wird nun die Herstellung des Dachmoduls 10 erläutert. Zur Herstellung der Innenschicht 16 wird eine Schäumform 20 verwendet, in die das die Innenschicht 16 bildende Polyurethan zusammen mit den das Verstärkungsmaterial bildenden Glasfasern eingebracht wird. Hierzu ist ein schematisch dargestellter Mischkopf 22 vorgesehen.

Nach dem Aushärten des Polyurethans wird die Innenschicht 16 entnommen (siehe Figur 4) und in eine zweite Schäumform 24 (siehe Figur 5) als Einlegeteil eingelegt. Dann wird ein zweites Polyurethan in die Schäumform 24 so eingebracht, daß es die Innenschicht 16 auf einer Seite vollständig flächig überdeckt. Zum Einbringen des die Außenschicht 14 bildenden Polyurethans ist ein zweiter Mischkopf 26 vorgesehen.

Diejenige Abformfläche der Kavität im Schäumwerkzeug 24, von der die Außenschicht 14 abgeformt wird und die hier mit dem Bezugszeichen 28 versehen ist, ist mit besonders hoher Oberflächenqualität ausgeführt, beispielsweise poliert und/oder verchromt. Auf diese Weise läßt sich die Außenschicht 14 mit einer Oberlflächenqualität abformen, die für das menschliche Auge absolut glatt aussieht, also schlierenfrei und ohne Wellen ist.

Der besondere Vorteil des beschriebenen Verfahrens besteht darin, daß die Außenschicht 14 auf die Innenschicht 16 aufgebracht werden kann, ohne daß besondere Zwischenschritte erforderlich sind, um eine gute mechanische Haftung zwischen den beiden Schichten zu gewährleisten. Ein weiterer Vorteil besteht, daß mit geringem Aufwand eine Außenfläche der Außenschicht 14 erhalten wird, die allen optischen Anforderungen gerecht wird.

### Bezugszeichenliste:

- 10:: Dachmodul
- 12:: Dachöffnung
- 14:: Außenschicht
- 16:: Innenschicht
- 18:: Verbindungsnut
- 20:: Schäumform
- 22:: Mischkopf
- 24:: Schäumform
- 26:: Mischkopf
- 28:: Abformfläche der Kavität

## Patentansprüche

1. Dachmodul (10) für ein Fahrzeug, mit einer Außenschicht (14), die aus Polyurethan besteht, und einer Innenschicht (16), die ebenfalls aus Polyurethan besteht, wobei die Innenschicht dicker ist als die Außenschicht und mit einem Verstärkungsmaterial versehen ist.

2. Dachmodul nach Anspruch 1, **dadurch gekennzeichnet, daß** das Verstärkungsmaterial aus hochfesten Fasern besteht, die in die Innenschicht (16) eingebettet sind.

3. Dachmodul nach Anspruch 2, **dadurch gekennzeichnet, daß** das Verstärkungsmaterial durch Glasfasern gebildet ist.

4. Dachmodul nach einem der vorhergehenden Ansprüche, **dadurch gekennzeichnet, daß** die Außenschicht (14) eingefärbt ist.

5. Verfahren zur Herstellung eines Dachmoduls mittels der folgenden Schritte:
- es wird ein Einlegeteil (16) hergestellt, das aus Polyurethan besteht, in das ein Verstärkungsmaterial eingebettet ist;
- das Einlegeteil wird in eine Schäumform (24) eingelegt,
- es wird auf das Einlegeteil (16) eine Außenschicht (14) aufgeschäumt, die aus Polyurethan besteht.

6. Verfahren nach Anspruch 5, **dadurch gekennzeichnet, daß** das die Außenschicht (14) bildende Polyurethan vor dem Einbringen in die Schäumform eingefärbt wird.

7. Verfahren nach einem der Ansprüche 5 und 6, **dadurch gekennzeichnet, daß** die Fläche (28) der Schäumform, von der die Außenschicht (14) abgeformt wird, poliert ist.

8. Verfahren nach einem der Ansprüche 5 bis 7, **dadurch gekennzeichnet, daß** die Fläche (28) der Schäumform, von der die Außenschicht (14) abgeformt wird, verchromt ist.
